(19) Europäisches Patentamt
European Patent Office
Office européen des brevets

(11) EP 2 599 833 B1

(12) **EUROPEAN PATENT SPECIFICATION**

(45) Date of publication and mention of the grant of the patent:
**05.09.2018 Bulletin 2018/36**

(21) Application number: **11812348.8**

(22) Date of filing: **20.07.2011**

(51) Int Cl.:
***C08L 53/02*** *(2006.01)* ***C08L 29/14*** *(2006.01)*
***C09J 11/06*** *(2006.01)* ***C09J 129/14*** *(2006.01)*
***C09J 151/00*** *(2006.01)* ***C09J 153/02*** *(2006.01)*
***C09J 5/06*** *(2006.01)*

(86) International application number:
**PCT/JP2011/066492**

(87) International publication number:
**WO 2012/014757 (02.02.2012 Gazette 2012/05)**

(54) **THERMOPLASTIC POLYMER COMPOSITION AND MOLDED ARTICLE**

THERMOPLASTISCHE POLYMERZUSAMMENSETZUNG UND FORMARTIKEL

COMPOSITION DE POLYMÈRE THERMOPLASTIQUE ET ARTICLE MOULÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.07.2010 JP 2010171072**

(43) Date of publication of application:
**05.06.2013 Bulletin 2013/23**

(73) Proprietor: **Kuraray Co., Ltd.**
**Okayama 710-0801 (JP)**

(72) Inventors:
- **MINAMIDE, Asako**
**Kamisu-shi**
**Ibaraki 314-0197 (JP)**
- **MASUDA, Mikio**
**Kamisu-shi**
**Ibaraki 314-0197 (JP)**

(74) Representative: **Müller-Boré & Partner Patentanwälte PartG mbB**
**Friedenheimer Brücke 21**
**80639 München (DE)**

(56) References cited:
**EP-A1- 2 223 965**
**WO-A1-2005/063876**
**WO-A1-2009/081877**
**JP-A- 2003 268 193**
**JP-A- 2004 059 635**
**JP-A- 2004 059 636**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 599 833 B1

## Description

The present invention relates to thermoplastic polymer compositions which are excellent in flexibility, mechanical properties, and moldability and capable of adhering to ceramics, metals and synthetic resins without treatment with a primer and other treatments and capable of maintaining a high adhesion (also referred to as "heat resistance") in an environment at 60 °C or higher, and also relates to molded products produced by using the thermoplastic polymer compositions.

Ceramics, metals, and synthetic resins have been widely used for electrical home appliances, electronic parts, machine parts, automotive parts, and other uses, because they are excellent in durability, heat resistance, and mechanical strength. In some cases, these materials are adhered to or made into composite with an elastomeric material excellent in flexibility according to their uses, other constituting parts, and methods of use, for example, for fixing these materials to other structural members, absorbing shock, preventing damages, and sealing.

As such elastomeric material, a styrene-based thermoplastic elastomer excellent in flexibility, mechanical properties, and moldability can be suitably used. The styrene-based thermoplastic elastomer referred to herein is a block copolymer having a polymer block constituted by aromatic vinyl compound units and a polymer block constituted by conjugated diene units and a hydrogenated product of the block copolymer. However, since the adhesion strength of the styrene-based thermoplastic elastomer to ceramics, metals, and synthetic resins are poor because of its low polarity, the styrene-based thermoplastic elastomer cannot be fuse-bonded to these materials without an additional treatment. To eliminate this problem, several methods have been proposed, in which the surface of ceramics, metals, or synthetic resins is coated with an adhesive or treated with a primer before adhering the styrene-based thermoplastic elastomer to ceramics, metals, or synthetic resins (Patent Documents 1 to 6).

However, the methods disclosed in Patent Documents 1 to 6 include complicated steps and also the productivity is low to increase production costs.

To eliminate this problem, a thermoplastic polymer composition containing a styrene-based thermoplastic elastomer and a polyvinyl acetal, which is excellent in adhesion to ceramics, metals, and synthetic resins, is proposed (Patent Document 7). The proposed thermoplastic polymer composition adheres to ceramics, metals, and synthetic resins only by heat treatment without adhesive or treatment with a primer.

Patent Document 1: JP 2006-291019A
Patent Document 2: JP 2006-206715A
Patent Document 3: JP 63-25005A
Patent Document 4: JP 9-156035A
Patent Document 5: JP 2009-227844A
Patent Document 6: JP 2010-1364A
Patent Document 7: WO 2009/081877

The thermoplastic polymer composition actually disclosed in the working examples of Patent Document 7 is excellent in flexibility, mechanical properties, moldability, and adhesion. However, after studying closely, the inventors have found that the adhesion of the proposed thermoplastic polymer composition to ceramics, metals, and synthetic resins is reduced significantly when the molded product of the thermoplastic polymer composition adhered to ceramics, metals, and synthetic resins is kept in the environment at 60 °C or higher. For example, the automotive parts made of such molded products are frequently exposed to a high temperature environment at 60 °C or higher in summer. Therefore, the thermoplastic polymer composition and molded product actually disclosed in Patent Document 7 leave room for further improvement in view of the heat resistance.

The present invention has been made in view of the above problems and intends to provide a thermoplastic polymer composition which is excellent in flexibility, mechanical properties, and moldability, particularly in heat resistance and is capable of adhering to ceramics, metals, and synthetic resins without the treatment with a primer, and also provide a molded product produced by using the thermoplastic polymer composition.

As a result of extensive research, the inventors have found that the above problems are solved by a thermoplastic polymer composition comprising a thermoplastic elastomer (A), a polyvinyl acetal resin (B), and a softener (C) in specific blending ratios, wherein the thermoplastic elastomer (A) is a block copolymer which comprises a polymer block comprising aromatic vinyl compound units and a polymer block comprising conjugated diene units or a hydrogenated product of the block copolymer, and the glass transition temperature of the polyvinyl acetal resin (B) is regulated within a range of 80 to 130 °C, wherein the polyvinyl acetal resin (B) is obtained by acetalizing a polyvinyl alcohol with at least one aldehyde having 1 to 3 carbon atoms, the polyvinyl acetal resin (B) is obtained by acetalizing the polyvinyl alcohol by combinedly using at least one aldehyde having 4 to 9 carbon atoms, and a molar ratio of aldehyde having 1 to 3 carbon atoms/aldehyde having 4 to 9 carbon atoms in the acetalization is 40/60 to 80/20. The present invention is based on this finding.

Namely, the present invention provides:

1. a thermoplastic polymer composition comprising 100 parts by mass of a thermoplastic elastomer (A), 1 to 100 parts by mass of a polyvinyl acetal resin (B), and 0.1 to 300 parts by mass of a softener (C), wherein the thermoplastic elastomer (A) is a block copolymer which comprises a polymer block comprising aromatic vinyl compound units and a polymer block comprising conjugated diene units or a hydrogenated product of the block copolymer, and the polyvinyl acetal resin (B) has a glass transition temperature of 80 to 130 °C, wherein the polyvinyl acetal resin (B) is obtained by acetalizing a polyvinyl alcohol with at least one aldehyde having 1 to 3 carbon atoms, the polyvinyl acetal resin (B) is obtained by acetalizing the polyvinyl alcohol by combinedly using at least one aldehyde having 4 to 9 carbon atoms, and a molar ratio of aldehyde having 1 to 3 carbon atoms/aldehyde having 4 to 9 carbon atoms in the acetalization is 40/60 to 80/20;
2. the thermoplastic polymer composition of item 1, further comprising 0.1 to 20 parts by mass of a compatibilizer (D);
3. the thermoplastic polymer composition of item 1 or 2, comprising 100 parts by mass of the thermoplastic elastomer (A), 10 to 70 parts by mass of the polyvinyl acetal resin (B), 1 to 200 parts by mass of the softener (C), and 0.1 to 17 parts by mass of the compatibilizer (D);
4. the thermoplastic polymer composition of any one of items 1 to 3, wherein the aldehyde having 1 to 3 carbon atoms is acetaldehyde and the aldehyde having 4 to 9 carbon atoms is n-butyl aldehyde;
5. the thermoplastic polymer composition of any one of items 1 to 4, wherein the polyvinyl acetal resin (B) is obtained by acetalizing the polyvinyl alcohol having an average degree of polymerization of 100 to 4,000 to a degree of acetalization of 55 to 88% by mole;
6. the thermoplastic polymer composition of any one of items 1 to 5, wherein the compatibilizer (D) is a random copolymer of a non-polar polymerizable monomer and a polar polymerizable monomer or a block or graft copolymer comprising a non-polar polymer block and a polar polymer block;
7. a molded product comprising the thermoplastic polymer composition of any one of items 1 to 6;
8. the molded product of item 7, wherein the thermoplastic polymer composition is adhered to at least one material selected from ceramics, metals, and synthetic resins; and
9. the molded product of item 7, wherein ceramics, metals, synthetic resins, or at least two materials selected from ceramics, metals, and synthetic resins are adhered to each other via the thermoplastic polymer composition.

The thermoplastic polymer composition of the invention is excellent in flexibility, mechanical properties, and moldability, particularly in heat resistance. The molded product produced by adhering the thermoplastic polymer composition to at lease one material selected from ceramics, metals, and synthetic resins maintains adhesion strength sufficient for practical use even when exposed to an environment at 60 °C or higher, and therefore, finds wide applications.
In addition, the material to be adhered is not needed to be treated with a primer before the thermoplastic polymer composition is adhered to the material.

Thermoplastic Polymer Composition

The thermoplastic polymer composition of the invention comprises 100 parts by mass of a thermoplastic elastomer (A), 1 to 100 parts by mass of a polyvinyl acetal resin (B), and 0.1 to 300 parts by mass of a softener (C), wherein the thermoplastic elastomer (A) is a block copolymer constituted by a polymer block comprising aromatic vinyl compound units and a polymer block comprising conjugated diene units or a hydrogenated product of the block copolymer and the polyvinyl acetal resin (B) has a glass transition temperature of 80 to 130 °C.
The components (A) to (C) are described below in this order.

Thermoplastic Elastomer (A)

The block copolymer constituted by a polymer block comprising aromatic vinyl compound units and a polymer block comprising conjugated diene units and its hydrogenated product, which are contained in the thermoplastic polymer composition of the invention as the thermoplastic elastomer (A) (hereinafter simply referred to as " thermoplastic elastomer (A)"), are components for providing the thermoplastic polymer composition with flexibility, good mechanical properties, and good moldability and also act as a matrix of the composition.
The definition of the thermoplastic elastomer (A) does not include the compatibilizer (D) described below.

Polymer Block Comprising Aromatic Vinyl Compound Units

Examples of the aromatic vinyl compound which constitutes the polymer block comprising aromatic vinyl compound units include styrene, $\alpha$-methylstyrene, 2-methylstyrene, 3-methylstyrene, 4-methylstyrene, 4-propylstyrene, 4-cyclohexylstyrene, 4-dodecylstyrene, 2-ethyl-4-benzylstyrene, 4-(phenylbutyl)styrene, 1-vinylnaphthalene, and 2-vinylnaphthalene. The polymer block may be constituted of units which are derived from a single kind or a combination of two or more of the above aromatic vinyl compounds. Of the above aromatic vinyl compounds, preferred are styrene, α-methylstyrene, and 4-methylstyrene.

In the present invention, the polymer block preferably comprises 80% by mass or more of the aromatic vinyl compound units, more preferably 90% by mass or more of the aromatic vinyl compound units, and still more preferably 95% by mass or more of the aromatic vinyl compound units, each based on the initial charge of the raw materials. The polymer block may be constituted of only the aromatic vinyl compound units or may be constituted of the aromatic vinyl compound units and units derived from other polymerizable monomer if the effect of the invention is not adversely affected.

Examples of such polymerizable monomer include 1-butene, pentene, hexene, butadiene, isoprene, and methyl vinyl ether. The content of the unit of polymerizable monomer is preferably 20% by mass or less, more preferably 10% by mass or less, and still more preferably 5% by mass or less, each based on the total of the aromatic vinyl compound units and the units of polymerizable monomer.

Polymer Block Comprising Conjugated Diene Units

Examples of the conjugated diene compound which constitutes the polymer block comprising conjugated diene units include 1,3-butadiene (hereinafter simply referred to as "butadiene"), isoprene, 2,3-dimethyl-1,3-butadiene, 1,3-pentadiene, and 1,3-hexadiene, with butadiene and isoprene being preferred.

The polymer block may be constituted of units which are derived from a single kind or a combination of two or more of the above conjugated diene compounds, preferably units derived from butadiene or isoprene, and more preferably units derived from butadiene and isoprene.

The manner of bonding of the conjugated diene for forming the polymer block comprising the conjugated diene units is not particularly limited. For example, butadiene is polymerized in either of 1,2-bonding or 1,4-bonding to form the polymer block, and isoprene is polymerized in either of 1,2-bonding, 3,4-bonding, or 1,4-bonding. Particularly, in the polymer block wherein the conjugated diene units are derived from butadiene, isoprene, or both butadiene and isoprene, the total content of 1,4-bonding in the conjugated diene units constituting the polymer block is preferably 1 to 99% by mole, more preferably 60 to 98% by mole, still more preferably 80 to 98% by mole, and still further preferably 90 to 98% by mole.

The content of 1,4-bonding is calculated from the result of $^1$H-NMR measurement.

The content of the conjugated diene units in the "polymer block comprising conjugated diene units" referred to herein is preferably 80% by mole or more, more preferably 90% by mole or more, and still more preferably 95% by mole or more, each being based on the initial charge of the raw materials. The polymer block may be constituted of only the conjugated diene units or the conjugated diene units together with units of an additional polymerizable monomer, if the effect of the invention is not adversely affected.

Examples of the additional polymerizable monomer include styrene, α-methylstyrene, and 4-methylstyrene. The content of the units of the additional polymerizable monomer, if used, is preferably 20% by mass or less, more preferably 10% by mass or less, and still more preferably 5% by mass or less, each being based on the total of the conjugated diene units and the units of the additional polymerizable monomer.

The polymer block comprising aromatic vinyl compound units and the polymer block comprising conjugated diene units may be bonded by any manner, for example, bonded linearly, in branches, radially, or in combination of two or more thereof, and preferably bonded linearly.

When expressing the polymer block comprising aromatic vinyl compound units as "a" and the polymer block comprising conjugated diene units as "b," examples of the polymer blocks which are bonded linearly include a diblock copolymer represented by a-b, a triblock copolymer represented by a-b-a or b-a-b, a tetrablock copolymer represented by a-b-a-b, a pentablock copolymer represented by a-b-a-b-a or b-a-b-a-b, a copolymer represented by $(a\text{-}b)_nX$ wherein X is a coupling residue and n is an integer of 2 or more, and any combinations thereof, with the triblock copolymer being preferred and the triblock copolymer represented by a-b-a being more preferred.

The polymer block comprising conjugated diene units is preferably hydrogenated partly or completely, because heat resistance and weatherability are improved. The degree of hydrogenation of the polymer block comprising conjugated diene units is preferably 80% or more, more preferably 90% or more, when determined by the iodine values of the block copolymer before and after hydrogenation reaction.

The content of the polymer block comprising aromatic vinyl compound units in the thermoplastic elastomer (A) is preferably 5 to 75% by mass, more preferably 10 to 70% by mass, still more preferably 15 to 70% by mass, and particularly preferably 20 to 70% by mass, each based on the total amount of the thermoplastic elastomer (A), because flexibility and mechanical properties are good.

The weight average molecular weight of the thermoplastic elastomer (A) is preferably 30,000 to 300,000, more preferably 50,000 to 200,000, because mechanical properties and moldability are good. The weight average molecular

weight is determined by gel permeation chromatography (GPC) calibrated with polystyrene.

The thermoplastic elastomer (A) may be used singly or in combination of two or more. Particularly, in view of moldability, prevention of discoloring, and adhesion, the combined use of a thermoplastic elastomer (A) wherein the content of the polymer block comprising aromatic vinyl compound units is 5 to 40% by mass (hereinafter referred to as "component (A)") and a thermoplastic elastomer (A) wherein the content of the polymer block comprising aromatic vinyl compound units is 50 to 70% by mass (hereinafter referred to as "component (A")") is preferred. The ratio, component (A')/component (A"), by mass is preferably 50/50 to 99/1, more preferably 60/40 to 97/3, still more preferably 70/30 to 95/5, and particularly preferably 80/20 to 95/5.

The content of the polymer block comprising aromatic vinyl compound units in the thermoplastic elastomer (A) is preferably 15 to 40% by mass, more preferably 20 to 40% by mass for the component (A'), and preferably 55 to 70% by mass, more preferably 60 to 70% by mass% for the component (A").

Production of Thermoplastic Elastomer (A)

The production method of the thermoplastic elastomer (A) is not particularly limited, and it may be produced, for example, by anionic polymerization, such as:

(i) a method wherein first the aromatic vinyl compound, then the conjugated diene compound, and finally the aromatic vinyl compound are sequentially polymerized in the presence of an alkyllithium compound initiator;
(ii) a method wherein the aromatic vinyl compound and then the conjugated diene compound are sequentially polymerized in the presence of an alkyllithium compound initiator, and then a coupling agent is coupled; and
(iii) a method wherein the conjugated diene compound and then the aromatic vinyl compound are sequentially polymerized in the presence of a dilithium compound initiator.

Examples of the alkyllithium compound for the methods (i) and (ii) include methyllithium, ethyllithium, n-butyllithium, sec-butyllithium, tert-butyllithium, and pentyllithium. Examples of the coupling agent for the method (ii) include dichloromethane, dibromomethane, dichloroethane, dibromoethane, and dibromobenzene. Example of the dilithium compound for the method (III) include naphthalene dilithium and dilithiohexylbenzene.

The amounts of use of the initiator, such as the alkyllithium compound and the dilithium compound, and the coupling agent depend upon the intended weight average molecular weight of the thermoplastic elastomer (A). Generally, the initiator, such as the alkyllithium compound and the dilithium compound, is used 0.01 to 0.2 parts by mass based on 100 parts by mass of the total of the aromatic vinyl compound and the conjugated diene compound used in the anionic polymerization. In the method (ii), the coupling agent is generally used 0.001 to 0.8 parts by mass based on 100 parts by mass of the total of the aromatic vinyl compound and the conjugated diene compound used in the anionic polymerization.

The anionic polymerization is conducted preferably in the presence of a solvent. The solvent is not particularly limited as long as it is inert to the initiator and does not adversely affect the polymerization, and examples thereof include a saturated aliphatic hydrocarbon, such as hexane, heptane, octane, and decane, and an aromatic hydrocarbon, such as toluene, benzene, and xylene. The polymerization is conducted preferably at 0 to 80 °C for 0.5 to 50 h in any of the above polymerization methods.

The content of 1,2-bonding and 3,4-bonding in the thermoplastic elastomer (A) can be increased by conducting the anionic polymerization in the presence of an organic Lewis base, for example, ester, such as ethyl acetate; amine, such as triethylamine, N,N,N',N'-tetramethylethylenediamine (TMEDA), and N-methyl morpholine; nitrogen-containing heteroaromatic compound, such as pyridine; an amide, such as dimethylacetamide; ether, such as dimethyl ether, diethyl ether, tetrahydrofuran (THF), and dioxane; glycol ether, such as ethylene glycol dimethyl ether, and diethylene glycol dimethyl ether; sulfoxide, such as dimethyl sulfoxide; and ketone, such as acetone and methyl ethyl ketone. These organic Lewis bases may be used alone or in combination of two or more.

The non-hydrogenated thermoplastic elastomer (A) can be isolated after the polymerization by the method mentioned above by pouring the reaction product solution into a poor solvent to the block copolymer, such as methanol, thereby solidifying the block copolymer or by pouring the reaction product solution into hot water together with steam to azeotropically remove the solvent (steam stripping) and then drying.

The hydrogenated thermoplastic elastomer (A) is produced by the hydrogenation of the obtained non-hydrogenated thermoplastic elastomer (A). The hydrogenation reaction is conducted by allowing hydrogen to react with the thermoplastic elastomer (A) in the presence of a hydrogenation catalyst, using a solution of the non-hydrogenated thermoplastic elastomer (A) in a solvent inert to the reaction and the hydrogenation catalyst or using the reaction product solution as obtained without isolating the non-hydrogenated thermoplastic elastomer (A).

Examples of the hydrogenation catalyst include Raney nickel; a heterogeneous catalyst comprising a metal, such as Pt, Pd, Ru, Rh, and Ni, carried on a support, such as carbon, alumina and diatomaceous earth; and Ziegler

catalyst composed of a combination of a transition metal compound with an alkylaluminum compound or an alkyllithium compound; and metallocene catalyst.

The hydrogenation reaction is generally conducted at a hydrogen pressure of 0.1 to 20 MPa and a reaction temperature of 20 to 250 °C for a reaction time of 0.1 to 100 h. The hydrogenated thermoplastic elastomer (A) is isolated after the hydrogenation in the manner mentioned above by pouring the product solution of hydrogenation into a poor solvent, such as methanol, thereby solidifying the hydrogenated thermoplastic elastomer (A) or by pouring the product solution of hydrogenation into hot water together with steam to azeotropically remove the solvent (steam stripping) and then drying.

Polyvinyl Acetal Resin (B) Having Glass Transition Temperature of 80 to 130 °C

The polyvinyl acetal resin (B) having a glass transition temperature (Tg) of 80 to 130 °C (hereinafter also referred to simply as "polyvinyl acetal resin (B)") enhances the adhesion of the thermoplastic polymer composition and is generally dispersed in the thermoplastic polymer composition in island forms. By the use of the polyvinyl acetal resin (B), the thermoplastic polymer composition is firmly adhered to a material, such as ceramics, metals, and synthetic resins, without treating its surface with a primer.

The polyvinyl acetal resin (B) is a resin which comprises the repeating units represented by formula (I) and has a glass transition temperature (Tg) of 80 to 130 °C.

The glass transition temperature (Tg) is measured according to JIS K 7121 by using a differential scanning calorimeter (DSC) and elevating the temperature of sample at 10 °C/min.

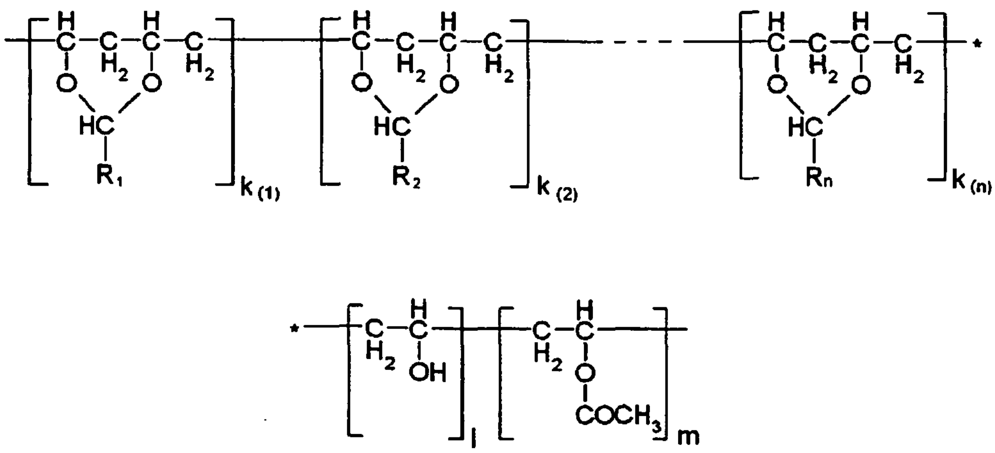

(I)

In formula (I), n represents the number of types of aldehydes used in acetalization; each of $R_1$, $R_2$, ..., and $R_n$ represents an alkyl group or a hydrogen atom in each aldehyde used in acetalization; each of $k_{(1)}$, $k_{(2)}$, ..., and $k_{(n)}$ represents the proportion (molar ratio) of the constitutional unit in [ ]; l represents the proportion (molar ratio) of vinyl alcohol units; and m represents the proportion (molar ratio) of vinyl acetate units, provided that $k_{(1)} + k_{(2)} + ... + k_{(n)} + l + m = 1$ and any of $k_{(1)}$, $k_{(2)}$, ..., $k_{(n)}$, l, and m can be zero.

The repeating units are not necessarily distributed in the above sequence and may be distributed in a random fashion, a block fashion, or a tapered fashion.

By using the polyvinyl acetal resin (B) having Tg of 80 to 130 °C, a thermoplastic polymer composition having a high heat resistance is obtained. Therefore, the heat resistance of the molded product which is produced by adhering the thermoplastic polymer composition to at lease one material selected from ceramics, metals, and synthetic resins is also improved, providing the molded product which exhibits the adhesion sufficient for practical use even in an environment at 60 °C or higher, particularly 60 to 70 °C.

Tg of the polyvinyl acetal resin (B) is not particularly limited as long as within a range of 80 to 130 °C, and preferably 80 to 110 °C. The production method of the polyvinyl acetal resin (B) is described below in detail.

Production of Polyvinyl Acetal Resin (B) Having Tg of 80 to 130 °C

The polyvinyl acetal resin (B) having Tg of 80 to 130 °C is produced, for example, by the reaction of a polyvinyl alcohol and specific aldehydes.

The average degree of polymerization of the polyvinyl alcohol for the production of the polyvinyl acetal resin

(B) is preferably 100 to 4,000, more preferably 100 to 3,000, still more preferably 200 to 2,500, and further preferably 250 to 2,500. If being 100 or more, the polyvinyl acetal resin (B) is easily produced and handled. If being 4,000 or less, the melt viscosity of the resultant polyvinyl acetal resin (B) is not excessively high during the melt kneading, to facilitate the production of the thermoplastic polymer composition of the invention.

The average degree of polymerization of polyvinyl alcohol referred to herein is determined according to the method of JIS K 6726, specifically, determined from the intrinsic viscosity measured in water at 30 °C after resaponification of polyvinyl alcohol and purification.

The production method of the polyvinyl alcohol is not particularly limited and the polyvinyl alcohol which is produced, for example, by saponifying polyvinyl acetate with alkali, acid, or ammonia is usable. Commercially available products, for example, "Kuraray Poval" series available from Kuraray Co., Ltd., are also usable. The polyvinyl alcohol may be saponified completely or partly. The degree of saponification is preferably 80% by mole or more, more preferably 90% by mole or more, and still more preferably 95% by mole or more.

Also usable as the polyvinyl alcohol includes a copolymer of vinyl alcohol and a monomer copolymerizable with vinyl alcohol, for example, an ethylene-vinyl alcohol copolymer and a partly saponified ethylene-vinyl alcohol copolymer. A modified polyvinyl alcohol which is partly introduced with a carboxylic acid is also usable. The above polyvinyl alcohol may be used singly or in combination of two or more.

In view of producing a polyvinyl acetal resin having Tg of 80 to 130 °C and obtaining a high heat resistance, an aldehyde having 1 to 3 carbon atoms is used for producing the polyvinyl acetal resin (B), namely, at least one aldehyde selected from the group consisting of formaldehyde (inclusive of paraformaldehyde), acetaldehyde (inclusive of paraacetaldehyde), and propionaldehyde is preferably used. A combination of at least one aldehyde having 1 to 3 carbon atoms and at least one aldehyde having 4 to 9 carbon atoms is used as long as the resultant polyvinyl acetal resin has Tg of 80 to 130 °C.

Preferred examples of the aldehydes having 4 to 9 carbon atoms include aliphatic aldehydes having 4 to 9 carbon atoms, such as n-butylaldehyde, isobutylaldehyde, pentanal, hexanal, heptanal, octanal, 2-ethylhexylaldehyde, cyclohexanecarbaldehyde, furfural, and glutaraldehyde, and aromatic aldehydes having 6 or more carbon atoms, such as benzaldehyde, methylbenzaldehyde, hydroxybenzaldehyde, phenylacetaldehyde, and phenylpropionaldehyde, with the aliphatic aldehydes having 4 to 9 carbon atoms being more preferred.

Since Tg of the resultant polyvinyl acetal resin can be controlled easily, the aldehyde having 4 to 9 carbon atoms is preferably at least one aldehyde having 4 to 6 carbon atoms, more preferably butyl aldehyde, and particularly preferably n-butyl aldehyde.

The molar ratio of the aldehyde having 1 to 3 carbon atoms and the aldehyde having 4 to 9 carbon atoms, i.e., aldehyde having 1 to 3 carbon atoms/aldehyde having 4 to 9 carbon atoms, is 40/60 to 80/20, preferably 50/50 to 80/20, and more preferably 50/50 to 70/30 in view of the heat resistance, and particularly preferably 55/45 to 70/30 and most preferably 57/43 to 63/37 in view of significantly improving the heat resistance.

In view of the compatibility with the thermoplastic elastomer (A), easiness of production, and easy availability, the combined use of acetaldehyde and butylaldehyde is preferred and the combined use of acetaldehyde and n-butyl aldehyde is more preferred. The total content of acetaldehyde and butyl aldehyde (particularly n-butyl aldehyde) to the total amount of aldehydes is preferably 80 to 100% by mass, more preferably 90 to 100% by mass, and still more preferably 95 to 100% by mass, in view of easiness of controlling Tg of the resultant polyvinyl acetal resin. For example, in the polyvinyl acetal resin (B) represented by formula (I) wherein only $R_1$ represents $C_3H_7$ and only $R_2$ represents $CH_3$, the total content is represented preferably by $0.8 \leq (k_{(1)} + k_{(2)})/(k_{(1)} + k_{(2)} + k_{(3)} \ldots + k_{(n)})$, more preferably by $0.9 \leq (k_{(1)} + k_{(2)})/(k_{(1)} + k_{(2)} + k_{(3)} \ldots + k_{(n)})$, still more preferably by $0.95 \leq (k_{(1)} + k_{(2)})/(k_{(1)} + k_{(2)} + k_{(3)} \ldots + k_{(n)})$.

The degree of acetalization of the polyvinyl acetal resin (B) is preferably 55 to 88% by mole. Polyvinyl acetal resin (B) having a degree of acetalization of 55% by mole or more is produced at lower costs, easily available, and melt-processed easily. Polyvinyl acetal resin (B) having a degree of acetalization of 88% by mole or less is economical, because which is produced very easily without requiring a long-term acetalization.

The degree of acetalization of the polyvinyl acetal resin (B) is more preferably 60 to 88% by mole, still more preferably 70 to 88% by mole, and particularly preferably 72 to 85% by mole. In view of adhesion to ceramics, metals and synthetic resins, it is advantageous for the polyvinyl acetal resin (B) to have a low degree of acetalization, because the content of hydroxyl groups increases with decreasing degree of acetalization. However, within the above ranges, the affinity and compatibility with the thermoplastic elastomer (A) is good, the mechanical properties of the resultant thermoplastic polymer composition are excellent, and the adhesion strength to ceramics, metals, and synthetic resins is high.

The degree of acetalization (% by mole) of the polyvinyl acetal resin (B) is defined by the following formula:

$$\text{Degree of acetalization (\% by mole)} = \{k_{(1)} + k_{(2)} + ... + k_{(n)}\} \times 2/\{\{k_{(1)} + k_{(2)} + ... + k_{(n)}\} \times 2 + l + m\} \times 100$$

wherein n, $k_{(1)}$, $k_{(2)}$, ..., $k_{(n)}$, l, and m are as defined above.

The degree of acetalization of the polyvinyl acetal resin (B) is determined in line with the method of JIS K 6728 (1977). Specifically, the ratio ($k_0$) of the vinyl acetal unit by mass is calculated from the formula: $k_0 = 1 - l_0 - m_0$, wherein $l_0$ is the ratio of the vinyl alcohol unit by mass and $m_0$ is the ratio of the vinyl acetate unit by mass, each determined by titration. Then, the molar ratio l of the vinyl alcohol unit is calculated from the formula: $1 = (l_0/44.1)/(l_0/44.1 + m_0/86.1 + 2k_0/Mw(\text{acetal}))$, and the molar ratio m of the vinyl acetate unit from the formula: $m = (m_0/86.1)/(l_0/44.1 + m_0/86.1 + k_0/Mw(\text{acetal}))$. Then, the molar ratio of the vinyl acetal unit ($k = k_{(1)} + k_{(2)} + ... + k_{(n)}$) is calculated from the formula: $k = 1 - l - m$. In the above formulae, Mw(acetal) is the molecular weight of a single vinyl acetal unit. For example, Mw(acetal) is Mw(butyral) = 142.2 for polyvinyl butyral. Finally, the degree of acetalization (% by mole) is calculated from the formula: $\{k_{(1)} + k_{(2)} + ... + k_{(n)}\} \times 2/\{\{k_{(1)} + k_{(2)} + ... + k_{(n)}\} \times 2 + l + m\} \times 100$.

The degree of acetalization of the polyvinyl acetal resin (B) can be also calculated from the results of $^1$H-NMR or $^{13}$C-NMR using a solution of the polyvinyl acetal resin (B) in an appropriate deuterated solvent, such as deuterated dimethyl sulfoxide

In the polyvinyl acetal resin (B), the content of the vinyl alcohol unit is preferably 12 to 45% by mole ($0.12 \leq l \leq 0.45$) and the content of the vinyl acetate unit is preferably 0 to 5% by mole ($0 \leq m \leq 0.05$), more preferably 0 to 3% by mole ($0 \leq m \leq 0.03$).

The reaction between the polyvinyl alcohol and the aldehydes (acetalization) can be conducted by a known method, for example, an aqueous solvent method in which an aqueous solution of the polyvinyl alcohol and the aldehydes are subjected to acetalization in the presence of an acid catalyst to precipitate the particles of the polyvinyl acetal resin (B), or a solvent method in which a dispersion of the polyvinyl alcohol in an organic solvent is subjected to acetalization with the aldehydes in the presence of an acid catalyst and then a poor solvent to the polyvinyl acetal resin (B), such as water, is added to the resultant reaction mixture to precipitate the polyvinyl acetal resin (B).

The acid catalyst is not particularly limited and examples thereof include organic acids, such as acetic acid and p-toluenesulfonic acid; inorganic acids, such as nitric acid, sulfuric acid, and hydrochloric acid; gaseous materials, such as carbon dioxide, which exhibit acidity when dissolved in water; and solid acid catalysts, such as cation exchange resin and metal oxide.

The slurry obtained in the aqueous solvent method and the solvent method is generally acidic because of the acidic catalyst contained therein. The acidity is reduced by a method in which the pH value is adjusted to preferably 5 to 9, more preferably 6 to 9, and still more preferably 6 to 8 by repeated washing with water; a method in which the pH value is adjusted to preferably 5 to 9, more preferably 6 to 9, and still more preferably 6 to 8 by adding a neutralizing agent; or a method of adding an alkylene oxide to the slurry.

Examples of the compound for adjusting the pH value include alkali metal hydroxides, such as sodium hydroxide and potassium hydroxide; alkali metal acetate, such as sodium acetate; alkali metal carbonates, such as sodium carbonate and potassium carbonate; alkali metal hydrogencarbonates, such as sodium hydrogencarbonate; and ammonia or aqueous ammonia solution. Examples of the alkylene oxide include ethylene oxide, propylene oxide, and glycidyl ethers, such as ethylene glycol diglycidyl ether.

Next, the salt generated by neutralization, the residual non-reacted aldehyde(s), etc. are removed.

The method for removal is not particularly limited and generally conducted by repeating dehydration and washing with water. The water-containing polyvinyl acetal resin (B) after removing the residues is, if necessary, dried and then, if necessary, made into powder, granule, or pellet.

The polyvinyl acetal resin (B) to be used in the invention is preferably deaerated under reduced pressure to reduce the content of the residual aldehyde(s) and water when made into powder, granule, or pellet.

The thermoplastic polymer composition of the invention contains 1 to 100 parts by mass of the polyvinyl acetal resin (B) per 100 parts by mass of the thermoplastic elastomer (A). If the content of the polyvinyl acetal resin (B) is less than 1 part by mass, sufficient adhesion to ceramics, metals, and synthetic resins is difficult to obtain. If exceeding 100 parts by mass, the thermoplastic polymer composition becomes hard to make it difficult to exhibit flexibility and mechanical properties, although adhesion is sufficient. The lower content of the polyvinyl acetal resin (B) is preferably 5 parts by mass or more, more preferably 10 parts by mass or more, still more preferably 20 parts by mass or more, and particularly preferably 25 parts by mass or more, and the upper content is more preferably 70 parts by mass or less, still more preferably 50 parts by mass or less, and particularly preferably 45 parts by mass or less, each based on 100 parts by mass of the thermoplastic elastomer (A). In another aspect of the invention, the content of the polyvinyl acetal resin (B) is preferably 1 to 70 parts by mass, more preferably 5 to 70 parts by mass, still more preferably 10 to 70 parts by mass, further preferably 10 to 50 parts by mass, still further preferably 20 to 50 parts by mass, and particularly preferably 25

to 45 parts by mass, each based on 100 parts by mass of the thermoplastic elastomer (A).

Softener (C)

Softeners generally used for rubbers and plastics are usable as the softener (C) to be used in the thermoplastic polymer composition of the invention.

Examples thereof include paraffin-type, naphthene-type, or aromatic-type process oils; phthalic acid derivatives, such as dioctyl phthalate and dibutyl phthalate; white oils; mineral oils; ethylene-$\alpha$-olefin oligomers; paraffin waxes; liquid paraffins; polybutene; low molecular weight polybutadiene; and low molecular weight polyisoprene, with process oils being preferred and paraffin-type process oils being more preferred.

Also usable are known softeners which are generally used in combination with polyvinyl acetal resins, for example, organic acid ester-type plasticizer, such as esters of monobasic organic acids or polybasic organic acids; and phosphoric acid-type plasticizer, such as organophosphoric esters and organophosphorous esters.

Examples of the esters of monobasic organic acids include glycol esters, such as triethylene glycol dicaproate, triethylene glycol di-2-ethyllactate, triethylene glycol di-n-octanoate, and triethylene glycol di-2-ethylhexanoate, which are obtained by the reaction between a glycol, such as triethylene glycol, tetraethylene glycol, and tripropylene glycol, and a monobasic organic acid, such as butyric acid, isobutyric acid, caproic acid, 2-ethylbutyric acid, heptylic acid, n-octylic acid 2-ethylhexylic acid, pelargonic acid (n-nonylic acid), and decylic acid.

Examples of the esters of polybasic organic acids include esters of a polybasic organic acid, such as adipic acid, sebacic acid, and azelaic acid, and a linear or branched alcohol, for example, dibutyl sebacate, dioctyl azelate, and dibutylcarbitol adipate

Examples of the organophosphoric esters include tributoxyethyl phosphate, isodecylphenyl phosphate, and triisopropyl phosphate.

The softeners (C) exemplified above may be used alone or in combination of two or more.

The thermoplastic polymer composition contains 0.1 to 300 parts by mass of the softener (C) per 100 parts by mass of the thermoplastic elastomer (A). If less than 0.1 part by mass, the flexibility and moldability of the thermoplastic polymer composition are reduced. If exceeding 300 parts by mass, the mechanical properties and the adhesion to ceramics, metals, and synthetic resins are reduced. The content of the softener (C) is preferably 1 part by mass or more, more preferably 10 parts by mass or more, and still more preferably 50 parts by mass or more, and also, preferably 200 parts by mass or less and more preferably 150 parts by mass or less, each based on 100 parts by mass of the thermoplastic elastomer (A).

In another aspect, the content of the softener (C) is preferably 1 to 200 parts by mass, more preferably 10 to 200 parts by mass, still more preferably 50 to 200 parts by mass, and particularly preferably 50 to 150 parts by mass, each based on 100 parts by mass of the thermoplastic elastomer (A).

Compatibilizer (D)

In addition to the components (A) to (C), the thermoplastic polymer composition of the invention preferably contains a compatibilizer (D). The compatibilizer (D) is not particularly limited as long as it improves the compatibility between the thermoplastic elastomer (A) and the polyvinyl acetal resin (B).

The compatibilizer (D) is preferably a random copolymer of a non-polar polymerizable monomer and a polar polymerizable monomer or a block or graft copolymer comprising a non-polar polymer block and a polar polymer block, with the block copolymer comprising the non-polar polymer block and the polar polymer block being more preferred.

Random Copolymer

Examples of the non-polar polymerizable monomer for use in the production of the random copolymer include aromatic vinyl compounds, such as styrene, $\alpha$-methylstyrene, 2-methylstyrene, 3-methylstyrene, 4-methylstyrene, 4-propylstyrene, 4-cyclohexylstyrene, 4-dodecylstyrene, 2-ethyl-4-benzylstyrene, 4-(phenylbutyl)styrene, 1-vinylnaphthalene, and 2-vinylnaphthalene; and olefin compounds, such as ethylene, propylene, 1-butene, 1-pentene, 1-hexence, 1-octene, 4-methyl-1-pentene, and cyclohexene. These monomers may be used alone or in combination of two or more. Of the above, styrene, ethylene, and propylene are preferably used in view of easy availability.

Examples of the polar polymerizable monomer for use in the production of the random copolymer include (meth)acrylic ester, (meth)acrylic acid, vinyl acetate, vinyl chloride, ethylene oxide, propylene oxide, acrylonitrile, and acrylamide. These monomers may be used alone or in combination of two or more. Of the above, the (meth)acrylic ester and acrylonitrile are preferably used in view of easy availability. Examples of the (meth)acrylic ester include alkyl acrylates, such as methyl acrylate, ethyl acrylate, n-propyl acrylate, isopropyl acrylate, n-butyl acrylate, and isobutyl acrylate; and alkyl methacrylates, such as methyl methacrylate, ethyl methacrylate, n-propyl methacrylate, isopropyl methacrylate, n-butyl methacrylate, and isobutyl methacrylate.

The polar polymerizable monomer may be post-treated after the polymerization, for example, by neutralizing (meth)acrylic acid with a metal ion to convert into an ionomer or hydrolyzing vinyl acetate.

The content of the non-polar polymerizable monomer is preferably 1 to 99% by mass, more preferably 1 to 70% by mass, and still more preferably 1 to 50% by mass, each based on the amount of total constitutional units in the random copolymer of the non-polar polymerizable monomer the polar polymerizable monomer. Within the above ranges, the affinity and compatibility with the thermoplastic elastomer (A) as well as the affinity and compatibility with the polyvinyl acetal resin (B) are good.

Block Copolymer and Graft Copolymer

The non-polar polymer block of the block copolymer and the graft copolymer is a polymer block formed by the polymerization of one or more kinds of polymerizable monomers, for example, selected from aromatic vinyl compounds, such as styrene, α-methylstyrene, 2-methylstyrene, 3-methylstyrene, 4-methylstyrene, 4-propylstyrene, 4-cyclohexylstyrene, 4-dodecylstyrene, 2-ethyl-4-benzylstyrene, 4-(phenylbutyl)styrene, 1-vinylnaphthalene, and 2-vinylnaphthalene; conjugated diene compounds, such as butadiene, isoprene, 2,3-dimethyl-1,3-butadiene, 1,3-pentadiene, and 1,3-hexadiene; and olefin compounds, such as ethylene, propylene, 1-butene, 1-pentene, 1-hexene, 1-octene, 4-methyl-1-pentene, and cyclohexene. The unit of the polymerizable monomer constituting the polymer block may be post-treated after the polymerization, for example, the unsaturated bonding of the unit derived from the conjugated diene compound may be hydrogenated.

In view of the affinity with the thermoplastic elastomer (A), the non-polar polymer block is preferably a block copolymer obtained from the aromatic vinyl compound and the conjugated diene compound, which is more preferably hydrogenated, with styrene being preferred as the aromatic vinyl compound and isoprene and butadiene being preferred as the conjugated diene compound.

The polar polymer block is, for example, a condensation polymer block which is based on polyurethane, polyester, polyamide, polycarbonate, polyurea, or polyacetal; or a polymer block formed by the polymerization of one or more kinds of monomers selected from (meth)acrylic esters, (meth)acrylic acid, vinyl acetate, vinyl chloride, ethylene oxide, propylene oxide, acrylonitrile, and acrylamide. In view of the compatibility with the polyvinyl acetal resin (B), a polyurethane polymer block is preferred, a polyester-based polyurethane block is more preferred, and a polyester-based polyurethane block having a soft segment comprising an aliphatic polyester is more preferred. "Kuramiron (registered trademark)" series manufactured by Kuraray Co., Ltd. are usable as the raw material for the polyester-based polyurethane block.

In a preferred block copolymer wherein the non-polar polymer block and the polar polymer block are copolymerized, the non-polar polymer block is a thermoplastic elastomer comprising the aromatic vinyl polymer block and the conjugated diene polymer block and the polar polymer block comprises the polyester-based polyurethane. The block copolymer mentioned above is obtained, for example, by melt-kneading a hydroxyl-terminated thermoplastic elastomer comprising the aromatic vinyl polymer block and the conjugated diene polymer block with the polyester-based polyurethane, and then extracting and recovering from the resultant reaction product by a known method.

The content of the polar polymer block to the total constitutional units of the copolymer wherein the non-polar polymer block and the polar polymer block are block-copolymerized or graft-copolymerize is preferably 20 to 80 % by mass, more preferably 30 to 70 % by mass, and still more preferably 40 to 60 % by mass, each based on the initial charge. Within the above ranges, in addition to the affinity and compatibility with the thermoplastic elastomer (A), the affinity and compatibility with the polyvinyl acetal resin (B) is also good.

If the thermoplastic polymer composition of the invention contains the compatibilizer (D), the content thereof is preferably 0.1 to 20 parts by mass, more preferably 0.1 to 17 parts by mass, and still more preferably 1 to 15 parts by mass, each based on 100 parts by mass of the thermoplastic elastomer (A).

If the content of the compatibilizer (D) is 0.1 part by mass or more, the compatibility between the thermoplastic elastomer (A) and the polyvinyl acetal resin (B) is enhanced to obtain a higher adhesion. If being 20 parts by mass or less, mechanical properties and prevention of coloration are good.

Other Optional Component

The thermoplastic polymer composition may contain inorganic filler, if necessary. The inorganic filler is effective for improving the properties of the thermoplastic polymer composition, such as heat resistance and weatherability, regulating hardness, and reducing production costs by its bulking nature. Examples of the inorganic filler include calcium carbonate, talc, magnesium hydroxide, aluminum hydroxide, mica, clay, natural silicic acid, synthetic silicic acid, titanium oxide, carbon black, barium sulfate, glass balloon, and glass fiber, although not limited thereto. These inorganic fillers may be used alone or in combination of two or more.

The inorganic filler is used preferably in an amount not to reduce the flexibility of the thermoplastic polymer composition, and the content thereof is preferably 100 parts by mass or less, more preferably 70 parts by mass or less, still more preferably 30 parts by mass or less, and particularly preferably 10 parts by mass or less, each based on 100 parts by mass of the thermoplastic elastomer (A).

The thermoplastic polymer composition may contain a tackifying resin as long as the effects of the invention are not adversely affected. Examples of the tackifying resin include rosin-type resin, terpene phenol-type resin, terpene resin, aromatic hydrocarbon-modified terpene resin, aliphatic petroleum resin, alicyclic petroleum resin, aromatic petroleum resin, coumarone-indene resin, phenol-type resin, and xylene resin.

The tackifying resin is used preferably in an amount not to reduce the mechanical properties of the thermoplastic polymer composition, and the content thereof is preferably 100 parts by mass or less, more preferably 70 parts by mass or less, still more preferably 30 parts by mass or less, and particularly preferably 10 parts by mass or less, each based on 100 parts by mass of the thermoplastic elastomer (A).

The thermoplastic polymer composition may further contain, if necessary, antioxidant, lubricant, light stabilizer, processing aid, colorant, such as pigment and dye, flame retardant, antistatic agent, delustering agent, silicone oil, antiblocking agent, ultraviolet absorber, mold release agent, foaming agent, antibacterial agent, anti-mold agent, and perfume, as long as the effects of the invention are not adversely affected. Examples of the antioxidant include hindered phenol-type antioxidant, phosphorus-type antioxidant, lactone-type antioxidant, and hydroxyl-type antioxidant, with the hindered phenol-type antioxidant being preferred. The antioxidant is used preferably in an amount not to discolor the thermoplastic polymer composition during melt kneading, and the content thereof is preferably 0.1 to 5 parts by mass based on 100 parts by mass of the thermoplastic elastomer (A).

The production method of the thermoplastic polymer composition is not particularly limited.

Any production method is usable as long as the components of the thermoplastic polymer composition mentioned above are uniformly mixed, and generally, a melt kneading method is used, in which the components are melt-kneaded in a melt-kneading machine, such as single-screw extruder, twin-screw extruder, kneader, batch mixer, roller, and Banbury mixer, preferably at 170 to 270 °C, thereby obtaining the thermoplastic polymer composition.

The hardness of the thermoplastic polymer composition measured according to JIS-A method of JIS K 6253 (also referred to as "type A hardness") is preferably 93 or less, more preferably 30 to 85, still more preferably 40 to 75, and particularly preferably 40 to 60. If type A hardness is excessively high, good flexibility, elasticity, and mechanical properties are difficult to obtain, and the resultant thermoplastic polymer composition fails to exhibit excellent adhesion to synthetic resins, ceramics, and metals, particularly resins containing inorganic filler, such as glass fibers. Type A hardness referred to herein is measured according to JIS K 6253.

Molded product

The present invention further provides molded products obtained by using the thermoplastic polymer composition.

The thermoplastic polymer composition of the invention is excellent in moldability and is made into molded products with various shapes. The molded product may be sheet or film.

The thermoplastic polymer composition can be formed into molded products by various processing methods which are generally used for forming known thermoplastic polymer compositions, for example, by any of injection molding method, extrusion method, press molding method, blow molding method, calender method, and casting method. T-die method, calender method, inflation method, and belt method which are generally known are usable in film or sheet formation.

In a preferred embodiment of the invention, the molded product comprises the thermoplastic polymer composition which is adhered to at least one material selected from ceramics, metals, and synthetic resins, or the molded product comprises the thermoplastic polymer composition which is adhered between the same kind of material selected from ceramics, metals, and synthetic resins or between at least two kinds of materials selected from ceramics, metals, and synthetic resins. The adhesion strength of the thermoplastic polymer composition in the molded product is preferably 20 N/25 mm or more, because the peeling by human hands is generally difficult. If less than 20 N/25 mm, the adhesion strength is insufficient for practical use, because easily peeled with slight resistance. The adhesion strength is measured according to JIS K 6854-2 described below in the example portion.

The thermoplastic polymer composition of the invention is excellent in flexibility, mechanical properties, moldability, and particularly heat resistance and adhered to ceramics, metals, and synthetic resins without a priming treatment. Therefore, the molded product comprising the thermoplastic polymer composition adhered to at least one material selected from ceramics, metals, and synthetic resins exhibits an adhesion strength sufficient for practical use even in an environment at 60 °C or higher and finds a wide range of applications. Specifically, the molded product of the invention exhibits a sufficient adhesion strength even when heated to 60 to 70 °C, this effect being remarkable when the adherends are ceramics (particularly glass) and metals (particularly aluminum).

The ceramics for use in the molded product is a non-metallic inorganic material, such as metal oxides, metal carbides, and metal nitrides, for example, glass, cement, alumina, zirconia, zinc oxide ceramics, barium titanate, lead zirconate titanate, silicon carbide, silicon nitride, and ferrite.

The metal for use in the molded product includes, for example, iron, copper, aluminum, magnesium, nickel, chromium, zinc, and alloys of these metals. A material having a metallic surface formed by copper plating, nickel plating, chromium plating, tin plating, zinc plating, platinum plating, gold plating, or silver plating is also usable.

The synthetic resin for use in the molded product include, for example, polyamide resin, polyester resin, polycarbonate resin, polyphenylene sulfide resin, (meth)acrylonitrile-butadiene-styrene resin, (meth)acrylonitrile-styrene resin, (meth)acrylic ester-butadiene-styrene resin, (meth)acrylic ester-styrene resin, butadiene-styrene resin, epoxy resin, phenol resin, diallyl phthalate resin, polyimide resin, melamine resin, polyacetal resin, polysulfone resin, polyether sulfone resin, polyether imide resin, polyphenylene ether resin, polyarylate resin, polyether ether ketone resin, polystyrene resin, syndiotactic polystyrene resin, and polyolefin resin. These resins may be used alone or in combination of two or more.

The synthetic resin mentioned above may contain inorganic filler, such as calcium carbonate, talc, magnesium hydroxide, aluminum hydroxide, mica, clay, natural silicic acid, synthetic silicic acid, titanium oxide, carbon black, barium sulfate, glass fiber, and glass balloon. These inorganic fillers may be used alone or in combination of two or more. Of the above, glass fiber is preferred.

The inorganic filler is blended preferably in an amount not to deteriorate the moldability and mechanical strength of the resin blended with the inorganic filler, and the content thereof is preferably 0.1 to 100 parts by mass, more preferably 1 to 50 parts by mass, and still more preferably 3 to 40 parts by mass, each based on 100 parts by mass of the synthetic resin.

The production method of the molded product comprising the thermoplastic polymer composition adhered to the ceramic or metal is not particularly limited and any method can be employed as long as the thermoplastic polymer composition is fuse-bonded to ceramic and metal. For example, an injection insert method, an extrusion lamination method, a press molding method, and a melt casting method are usable.

In the production of an adhered molded product by the injection insert method, an adherend with a given shape and a given dimension is placed in a mold and then the thermoplastic polymer composition is injected into the mold. In the production of an adhered molded product by the extrusion lamination method, a molten thermoplastic polymer composition is extruded directly onto the surface or edge of an adherend with a given shape and a given dimension from a die with a given shape which is disposed on an extruder. In the production of an adhered molded product by the press molding method, the thermoplastic polymer composition is formed into a shaped product by injection molding or extrusion and then the obtained shaped product is heat-pressed to an adherend with a given shape and a given dimension by a press molding machine. The surface not adhered to the adherend may be covered with a layer of a non-polar resin, such as olefin resin and cyclic olefin resin, for protection or decoration.

The production method of the molded product comprising the thermoplastic polymer composition adhered to the synthetic resin mentioned above is not particularly limited. The molded product can be produced by coextruding or co-injecting a molten composition and a molten resin, or by preparing molded product comprising one of the composition or the resin and then melt-coating or solution-coating the other on the obtained molded product. In addition, a two-color molding method and an insert molding method are available.

The thermoplastic polymer composition of the invention is widely applicable to the production of the molded product mentioned above. The shape, structure, and use of the molded product made from the thermoplastic polymer composition of the invention are not particularly limited, and the present invention includes any of structures as long as comprising the thermoplastic polymer composition of the invention which is adhered to ceramics, metals or synthetic resins.

Synthetic resins, synthetic resins blended with glass fiber, and light metals, such as aluminum alloy and magnesium alloy, have been used as the housing material of electronic or electric appliances, OA equipments, household appliances, and automotive parts. The molded product having the thermoplastic polymer composition of the invention adhered is applicable to such housing material. Specifically, the molded product is bonded to the housing of large-sized display, notebook computer, mobile phone, PHS, PDA (personal digital assistant, such as electric organizer), electronic dictionary, video camera, digital still camera, portable radio cassette player, and inverter to work as a shock absorber, a non-slip coating, a waterproof material or a decorative material.

The thermoplastic polymer composition is also useful in a wide application as a molded product or structural member to be adhered to glass, for example, a window molding or gasket for automobiles and buildings, a sealant for glass, and an anti-corrosion material. The thermoplastic polymer composition is further useful for adhesively joining glass with aluminum sash or metal openings of windows of automobiles and buildings or adhesively joining glass with metal frame of photovoltaic modules. The thermoplastic polymer composition is further useful as the separator of rechargeable batteries for use in personal digital assistants, such as notebook computer, mobile phone, and video camera, hybrid vehicle, and fuel cell vehicle.

The thermoplastic polymer composition of the invention is suitably used as an adhesive. As shown in the

following examples, since the thermoplastic polymer composition exhibits good adhesiveness to any of ceramics, metals, and synthetic resins, it is useful as an adhesive for bonding not only the same material but also different materials. In addition, since the thermoplastic polymer composition is flexible, the adhesive can reduce the defect due to the difference in the coefficient of thermal expansion between different materials.

EXAMPLES

The present invention is described below in more detail with reference to the examples. However, it should be noted that the scope of the present invention is not limited thereto.

The components used in the following examples and comparative examples are described below.

Styrene-Type Thermoplastic Elastomer (A1)

Into a dried pressure vessel purged with nitrogen, 80 L of cyclohexane solvent and 0.17 L of sec-butyllithium initiator (10% by mass solution in cyclohexane) were charged. After raising the temperature to 50 °C, 3.9 L of styrene was added to allow the polymerization to proceed for 3 h. Then, the polymerization was allowed to proceed for 4 h after adding a mixed liquid of 12.1 L of isoprene and 10.9 L of butadiene and further for 3 h after adding 3.9 L of styrene. The resultant reaction solution of polymer was poured into 80 L of methanol, and the precipitated solid matter was separated by filtration and dried at 50 °C for 20 h, to obtain a triblock copolymer comprising polystyrene block-poly(isoprene/butadiene) block-polystyrene block.

Then, 20 kg of the obtained triblock copolymer was dissolved in 200 L of cyclohexane. After adding a palladium carbon hydrogenation catalyst (content of carried palladium: 5% by mass) in an amount of 5% by mass of the copolymer, the reaction was allowed to proceed for 10 h at 150 °C under a hydrogen pressure of 2 MPa. After allowing the reaction production mixture to cool and releasing the pressure, the palladium carbon was removed by filtration. The filtrate was condensed and vacuum-dried to obtain a hydrogenated product (A1) of the triblock copolymer. The obtained thermoplastic elastomer (A1) had a weight average molecular weight of 170,000, a styrene content of 32% by mass, a degree of hydrogenation of 97%, a molecular weight distribution of 1.04, and a 1,4-bonding content of 95% by mole.

Styrene-Type Thermoplastic Elastomer (A2)

Into a dried pressure vessel purged with nitrogen, 80 L of cyclohexane solvent and 0.26 L of sec-butyllithium initiator (10% by mass solution in cyclohexane) were charged. After raising the temperature to 50 °C, 7.5 L of styrene was added to allow the polymerization to proceed for 3 h. Then, the polymerization was allowed to proceed for 4 h after adding 10.7 L of isoprene and further for 3 h after adding 7.5 L of styrene. The resultant reaction solution of polymer was poured into 80 L of methanol, and the precipitated solid matter was separated by filtration and dried at 50 °C for 20 h, to obtain a triblock copolymer comprising polystyrene block-polyisoprene block-polystyrene block.

Then, 20 kg of the obtained triblock copolymer was dissolved in 200 L of cyclohexane. After adding a palladium carbon hydrogenation catalyst (content of carried palladium: 5% by mass) in an amount of 5% by mass of the copolymer, the reaction was allowed to proceed for 10 h at 150 °C under a hydrogen pressure of 2 MPa. After allowing the reaction production mixture to cool and releasing the pressure, the palladium carbon was removed by filtration. The filtrate was condensed and vacuum-dried to obtain a hydrogenated product (A2) of the triblock copolymer. The obtained thermoplastic elastomer (A2) had a weight average molecular weight of 80,000, a styrene content of 65% by mass, a degree of hydrogenation of 95%, a molecular weight distribution of 1.02, and a 1,4-bonding content of 93% by mole.

In the following, acetaldehyde may be referred to as "AA" and n-butyl aldehyde may be referred to as "BA."

Polyvinyl Acetal Resin (B1): AA/BA = 68/32, Tg = 91 °C

Into an aqueous solution of a polyvinyl alcohol resin having an average degree of polymerization of 1700 and a degree of saponification of 99% by mole, acetaldehyde and n-butylaldehyde were added in a molar ratio (AA/BA) of 68/32 and then an acid catalyst (hydrochloric acid) were added. The acetalization was conducted under stirring. The precipitated resin was washed by a known method until the pH value reached 6. Then, the resin was suspended in an aqueous alkaline medium and post-treated under stirring. The resultant resin was washed until the pH value reached 7 and dried until the volatile component was reduced to 0.3%, to obtain a polyvinyl acetal resin (B1) having a degree of acetalization of 76% by mole.

Polyvinyl Acetal Resin (B2): AA/BA = 60/40, Tg = 85 °C

Into an aqueous solution of a polyvinyl alcohol resin having an average degree of polymerization of 1700 and

a degree of saponification of 99% by mole, acetaldehyde and n-butylaldehyde were added in a molar ratio (AA/BA) of 60/40 and then an acid catalyst (hydrochloric acid) were added. The acetalization was conducted under stirring. The precipitated resin was washed by a known method until the pH value reached 6. Then, the resin was suspended in an aqueous alkaline medium and post-treated under stirring. The resultant resin was washed until the pH value reached 7 and dried until the volatile component was reduced to 0.3%, to obtain a polyvinyl acetal resin (B2) having a degree of acetalization of 75% by mole.

Polyvinyl Acetal Resin (B3): AA/BA = 53/47, Tg = 84 °C

Into an aqueous solution of a polyvinyl alcohol resin having an average degree of polymerization of 300 and a degree of saponification of 99% by mole, acetaldehyde and n-butylaldehyde were added in a molar ratio (AA/BA) of 53/47 and then an acid catalyst (hydrochloric acid) were added. The acetalization was conducted under stirring. The precipitated resin was washed by a known method until the pH value reached 6. Then, the resin was suspended in an aqueous alkaline medium and post-treated under stirring. The resultant resin was washed until the pH value reached 7 and dried until the volatile component was reduced to 0.3%, to obtain a polyvinyl acetal resin (B3) having a degree of acetalization of 72% by mole.

Polyvinyl Acetal Resin (B' 4): AA/BA = 0/100, Tg = 65 °C

Into an aqueous solution of a polyvinyl alcohol resin having an average degree of polymerization of 1000 and a degree of saponification of 99% by mole, n-butylaldehyde and an acid catalyst (hydrochloric acid) were added. The acetalization was conducted under stirring. The precipitated resin was washed by a known method until the pH value reached 6. Then, the resin was suspended in an aqueous alkaline medium and post-treated under stirring. The resultant resin was washed until the pH value reached 7 and dried until the volatile component was reduced to 0.3%, to obtain a polyvinyl acetal resin ($B'_4$) having a degree of acetalization of 80% by mole.

Softener (C1)

Paraffin process oil "Diana Process PW-90" manufactured by Idemitsu Kosan Co., Ltd. was used.

Compatibilizer (D1)

A block copolymer comprising a hydrogenated product of a triblock copolymer and a polyurethane-based block produced by the following method was used. The triblock copolymer was a hydroxyl-terminated copolymer comprising polystyrene block-poly(isoprene/butadiene) block-polystyrene block.

Into a dried pressure vessel purged with nitrogen, 80 L of cyclohexane solvent and 0.51 L of sec-butyllithium initiator (10% by mass solution in cyclohexane) were charged. After raising the temperature to 50 °C, 3.5 L of styrene was added to allow the polymerization to proceed for 3 h. Then, the polymerization was allowed to proceed for 4 h after adding a mixed liquid of 13.1 L of isoprene and 11.8 L of butadiene and further for 3 h after adding 3.5 L of styrene, and then, 0.05 L of ethylene oxide was added. The resultant reaction liquid of polymer was poured into 80 L of methanol, and the precipitated solid matter was separated by filtration and dried at 50 °C for 20 h, to obtain a hydroxyl-terminated triblock copolymer composed of polystyrene block-poly(isoprene/butadiene) block-polystyrene block.

Then, 20 kg of the obtained hydroxyl-terminated triblock copolymer was dissolved in 200 L of cyclohexane. After adding a palladium carbon hydrogenation catalyst (content of carried palladium: 5% by mass) in an amount of 5% by mass of the copolymer, the reaction was allowed to proceed for 10 h at 150 °C under a hydrogen pressure of 2 MPa. After allowing the reaction production mixture to cool and releasing the pressure, the palladium carbon was removed by filtration. The filtrate was condensed and vacuum-dried to obtain a hydrogenated product of the hydroxyl-terminated triblock copolymer. The obtained hydroxyl-terminated styrene-based thermoplastic elastomer had a weight average molecular weight of 59,000, a styrene content of 28% by mass, a degree of hydrogenation of 95%, and an average hydroxyl content of 0.9.

A dry blend of 100 parts by mass of the hydroxyl-terminated styrene-based thermoplastic elastomer obtained above and 100 parts by mass of a thermoplastic polyurethane ("Kuramiron U 2000" manufactured by Kuraray Co., Ltd., a polyester-type polyurethane elastomer having an aliphatic polyester soft segment) was melt-kneaded in a twin-screw extruder at a cylinder temperature of 220 °C and a screw rotation of 150 rpm, extruded from the extruder and then cut into pellets.

The non-reacted polyurethane was removed from the pellets by extraction with dimethylformamide. By drying the solid matter remained after the extraction, a block copolymer (melt viscosity: 10 kPa•s), wherein the hydrogenated product of the hydroxyl-terminated triblock copolymer composed of polystyrene block-poly(isoprene/butadiene) block-polystyrene block and the polyurethane-based block were bonded to each other, was obtained as the compatibilizer (D1).

The thermoplastic polymer compositions produced below were measured and evaluated for their properties by the following methods and results thereof are collectively shown in Table 1.

Measurement of Melt Flow Rate (MFR)

Small pieces obtained by cutting each thermoplastic polymer composition sheet were measured for MFR at 230 °C under a load of 2.16 kg (21.18 N) according to the method of JIS K 7210. MFR was used as an index of the moldability, and the moldability becomes excellent with increasing MFR.

Measurement of Hardness

Several sheets of each thermoplastic polymer composition were piled to a thickness of 6 mm and measured for type A hardness by using a type A durometer according to JIS K 6253.

Tensile Break Strength and Tensile Elongation at Break

A dumbbell test piece (No. 5) prepared from each thermoplastic polymer composition sheet was measured for the tensile break strength and tensile elongation at break at a tensile speed of 500 mm/min according to JIS K 6251.

Preparation of Laminate with Glass Plate

Both surfaces of a glass plate of 75 mm length × 25 mm width × 1 mm thickness were washed with an aqueous solution of surfactant, methanol, acetone, and distilled water successively in this order and dried. The glass plate thus treated, each of the thermoplastic polymer composition sheets produced in the following examples and comparative examples, and a polyethylene terephthalate sheet having a thickness of 50 μm were piled in this order and the resultant pile was placed at the center of a metal spacer having outer dimensions of 200 mm × 200 mm, inner dimensions of 150 mm × 150mm, and a thickness of 2 mm.

The piled sheets together with the metal spacer were placed between two sheets of polytetrafluoroethylene, which was then put between two metal plates and compression-molded by using a compression molding machine at a temperature shown in examples and comparative examples under a load of 20 $kgf/cm^2$ (2 $N/mm^2$) for 3 min, thereby obtaining a laminate of polyethylene terephthalate sheet-thermoplastic polymer composition sheet-glass plate.

Preparation of Laminate with Aluminum Plate

Each laminate of polyethylene terephthalate sheet-thermoplastic polymer composition sheet-aluminum plate was prepared in the same manner as in the preparation of the laminate with glass plate except for washing both surfaces of an aluminum plate of 75 mm length × 25 mm width × 1 mm thickness with an aqueous solution of surfactant and distilled water successively in this order and drying.

Measurement of Adhesion Strength

Each of the laminates of the thermoplastic polymer composition sheet and the glass plate and the laminates of the thermoplastic polymer composition sheet and the aluminum plate produced above was allowed to stand for 10 min at each measuring temperature shown in Table 1 and then measured for the adhesion strength as an index of the heat resistance at a peel angle of 180° and a tensile speed of 50 mm/min according to JIS K 6854-2.

EXAMPLES 1 to 4 and Comparative Examples 1 to 2

Production of Thermoplastic Polymer Composition Sheet

The raw materials in the proportions shown in Table 1 were melt-kneaded in a batch mixer at 230 °C and a screw rotation number of 200 rpm. The kneaded product was compression-molded by using a compression molding machine at 230 °C under a load of 100 $kgf/cm^2$ (9.8 $N/mm^2$) for 3 min, thereby obtaining a thermoplastic polymer composition sheet having a thickness of 1 mm.

The obtained thermoplastic polymer composition sheet was measured and evaluated for its properties by the methods mentioned above. The results are shown in Table 1.

Table 1

| | Examples | | | | Comparative Examples | |
|---|---|---|---|---|---|---|
| | 1 | 2 | 3 | 4 | 1 | 2 |
| Compositions (parts by mass) | | | | | | |
| (A1) | 100 | 90 | 90 | 90 | 90 | 100 |
| (A2) | | 10 | 10 | 10 | 10 | |
| (B1) | 30 | 30 | | | | |
| (B2) | | | 30 | | | |
| (B3) | | | | 30 | | |
| (B'4) | | | | | 30 | 30 |
| (C1) | 100 | 100 | 100 | 100 | 100 | 100 |
| (D1) | 3 | 3 | 3 | 3 | 3 | 10 |
| MFR (g/10 min) | 0.5 | 0.6 | 1.1 | 2.2 | 0.7 | 0.3 |
| Hardness | 44 | 49 | 53 | 49 | 50 | 48 |
| Tensile break strength (MPa) | 10 | 9 | 9.1 | 10 | 4.9 | 12 |
| Tensile elongation at break (%) | 930 | 860 | 840 | 970 | 700 | 930 |
| Adhesion strength (N/25mm) | | | | | | |
| Glass | | | | | | |
| 23 °C | 66 | 95 | 103 | 93 | 134 | 123 |
| 40 °C | 58 | 93 | 93 | 62 | 122 | 110 |
| 60 °C | 24 | 34 | 53 | 33 | 1 | 1 |
| Aluminum | | | | | | |
| 23 °C | 63 | 95 | 101 | 90 | 129 | 117 |
| 40 °C | 59 | 91 | 95 | 60 | 110 | 105 |
| 60 °C | 23 | 35 | 50 | 35 | 1 | 1 |

As seen from Table 1, it can be found that each of the thermoplastic polymer compositions produced in Examples 1 to 4 which was blended with the polyvinyl acetal resin (B) having Tg of 80 to 130 °C was excellent in the flexibility, mechanical properties, and moldability and had a good adhesion to ceramic, metal, and synthetic resin without a priming treatment, particularly, excellent in the heat resistance because the adhesion strength of 20 N/25 mm or higher was obtained even when kept in the environment at 60 °C or higher. In contrast, each of the thermoplastic polymer compositions produced in the comparative examples showed drastic reduction in the adhesion strength when kept in the environment at 60 °C or higher, showing that the heat resistance was poor.

Of thermoplastic polymer compositions of Examples 2 to 4, particularly, the thermoplastic polymer composition of Example 3 showed a high adhesion strength at 60 °C and the most excellent heat resistance.

In Comparative Example 2, the compatibilizer (D1) was added more to enhance the compatibility between the thermoplastic elastomer (A1) and the polyvinyl acetal resin (B'4). However, the adhesion strength at 60 °C was only 1 N/25 mm, showing that the heat resistance cannot be enhanced by merely improving the mixing state by adding the compatibilizer (D1).

The thermoplastic polymer composition of the invention is useful as adhesives for joining glass with aluminum sash or metal openings of windows of automobiles and buildings or joining glass with metal frame of photovoltaic modules.

The molded product comprising the thermoplastic polymer composition of the invention is useful as housing materials for electronic or electric appliances, OA equipments, household appliances, and automotive parts, specifically as housing materials for large-sized display, notebook computer, mobile phone, PHS, PDA (personal digital assistant, such as electric organizer), electronic dictionary, video camera, digital still camera, portable radio cassette player, and inverter.

The thermoplastic polymer composition is also useful in a wide application as a molded product or structural

member to be adhered to glass, for example, a window molding or gasket for automobiles and buildings, a sealant for glass, and an anti-corrosion material.

The thermoplastic polymer composition is further useful as the separator of rechargeable batteries for use in personal digital assistants, such as notebook computer, mobile phone, and video camera, hybrid vehicle, and fuel cell vehicle.

## Claims

1. A thermoplastic polymer composition comprising 100 parts by mass of a thermoplastic elastomer (A), 1 to 100 parts by mass of a polyvinyl acetal resin (B), and 0.1 to 300 parts by mass of a softener (C), wherein the thermoplastic elastomer (A) is a block copolymer which comprises a polymer block comprising aromatic vinyl compound units and a polymer block comprising conjugated diene units or a hydrogenated product of the block copolymer, and the polyvinyl acetal resin (B) has a glass transition temperature of 80 to 130 °C,
wherein the polyvinyl acetal resin (B) is obtained by acetalizing a polyvinyl alcohol with at least one aldehyde having 1 to 3 carbon atoms,
the polyvinyl acetal resin (B) is obtained by acetalizing the polyvinyl alcohol by combinedly using at least one aldehyde having 4 to 9 carbon atoms, and
the molar ratio of aldehyde having 1 to 3 carbon atoms/aldehyde having 4 to 9 carbon atoms in the acetalization is 40/60 to 80/20.

2. The thermoplastic polymer composition according to claim 1, further comprising 0.1 to 20 parts by mass of a compatibilizer (D).

3. The thermoplastic polymer composition according to claim 1 or 2, comprising 100 parts by mass of the thermoplastic elastomer (A), 10 to 70 parts by mass of the polyvinyl acetal resin (B), 1 to 200 parts by mass of the softener (C), and 0.1 to 17 parts by mass of the compatibilizer (D).

4. The thermoplastic polymer composition according to any one of claims 1 to 3, wherein the aldehyde having 1 to 3 carbon atoms is acetaldehyde and the aldehyde having 4 to 9 carbon atoms is n-butyl aldehyde.

5. The thermoplastic polymer composition according to any one of claims 1 to 4, wherein the polyvinyl acetal resin (B) is obtained by acetalizing the polyvinyl alcohol having an average degree of polymerization of 100 to 4,000 to a degree of acetalization of 55 to 88% by mole.

6. The thermoplastic polymer composition according to any one of claims 1 to 5, wherein the compatibilizer (D) is a random copolymer of a non-polar polymerizable monomer and a polar polymerizable monomer or a block or graft copolymer comprising a non-polar polymer block and a polar polymer block.

7. A molded product comprising the thermoplastic polymer composition according to any one of claims 1 to 6.

8. The molded product according to claim 7, wherein the thermoplastic polymer composition is adhered to at least one material selected from ceramics, metals, and synthetic resins.

9. The molded product according to claim 7, wherein ceramics, metals, synthetic resins, or at least two materials selected from ceramics, metals, and synthetic resins are adhered to each other via the thermoplastic polymer composition.

## Patentansprüche

1. Thermoplastische Polymerzusammensetzung, umfassend 100 Massenteile eines thermoplastischen Elastomers (A), 1 bis 100 Massenteile eines Polyvinylacetalharzes (B) und 0,1 bis 300 Massenteile eines Weichmachers (C), wobei das thermoplastische Elastomer (A) ein Blockcopolymer, das einen Polymerblock, umfassend aromatische Vinylverbindungseinheiten, und einen Polymerblock, umfassend konjugierte Dieneinheiten, umfasst, oder ein hydriertes Produkt des Blockcopolymers ist, und das Polyvinylacetalharz (B) eine Glasübergangstemperatur von 80 bis 130 °C aufweist,
wobei das Polyvinylacetalharz (B) erhalten ist durch das Acetalisieren eines Polyvinylalkohols mit mindestens einem

Aldehyd mit 1 bis 3 Kohlenstoffatomen, das Polyvinylacetalharz (B) erhalten ist durch das Acetalisieren des Polyvinylalkohols unter kombinierter Verwendung mindestens eines Aldehyds mit 4 bis 9 Kohlenstoffatomen und das Molverhältnis von Aldehyd mit 1 bis 3 Kohlenstoffatomen/Aldehyd mit 4 bis 9 Kohlenstoffatomen bei der Acetalisierung 40/60 bis 80/20 beträgt.

**2.** Thermoplastische Polymerzusammensetzung nach Anspruch 1, weiter umfassend 0,1 bis 20 Massenteile eines Verträglichkeitsvermittlers (D).

**3.** Thermoplastische Polymerzusammensetzung nach Anspruch 1 oder 2, umfassend 100 Massenteile des thermoplastischen Elastomers (A), 10 bis 70 Massenteile des Polyvinylacetalharzes (B), 1 bis 200 Massenteile des Weichmachers (C) und 0,1 bis 17 Massenteile des Verträglichkeitsvermittlers (D).

**4.** Thermoplastische Polymerzusammensetzung nach einem der Ansprüche 1 bis 3, wobei der Aldehyd mit 1 bis 3 Kohlenstoffatomen Acetaldehyd ist und der Aldehyd mit 4 bis 9 Kohlenstoffatomen n-Butylaldehyd ist.

**5.** Thermoplastische Polymerzusammensetzung nach einem der Ansprüche 1 bis 4, wobei das Polyvinylacetalharz (B) erhalten ist durch das Acetalisieren des Polyvinylalkohols mit einem mittleren Polymerisationsgrad von 100 bis 4000 zu zu einem Acetalisierungsgrad von 55 bis 88 Mol-%.

**6.** Thermoplastische Polymerzusammensetzung nach einem der Ansprüche 1 bis 5, wobei der Verträglichkeitsvermittler (D) ein statistisches Copolymer eines nichtpolaren polymerisierbaren Monomers und eines polaren polymerisierbaren Monomers oder ein Block- oder Pfropfcopolymer, umfassend einen unpolaren Polymerblock und einen polaren Polymerblock, ist.

**7.** Formprodukt, umfassend die thermoplastische Polymerzusammensetzung nach einem der Ansprüche 1 bis 6.

**8.** Formprodukt nach Anspruch 7, wobei die thermoplastische Polymerzusammensetzung angehaftet ist an mindestens ein Material, ausgewählt aus Keramiken, Metallen und synthetischen Harzen.

**9.** Formprodukt nach Anspruch 7, wobei Keramiken, Metalle, synthetische Harze oder mindestens zwei Materialien, ausgewählt aus Keramiken, Metallen und synthetischen Harzen, über die thermoplastische Polymerzusammensetzung aneinanderhaften.

## Revendications

**1.** Composition de polymère thermoplastique comprenant 100 parties en masse d'un élastomère thermoplastique (A), 1 à 100 parties en masse d'une résine de polyvinylacétal (B) et 0,1 à 300 parties en masse d'un plastifiant (C), dans laquelle l'élastomère thermoplastique (A) est un copolymère à bloc qui comprend un bloc de polymère comprenant des motifs de composé vinylaromatique et un bloc de polymère comprenant des motifs diène conjugués ou un produit hydrogéné du copolymère à bloc, et la résine de polyvinylacétal (B) présente une température de transition vitreuse de 80 à 130°C,
dans laquelle la résine de polyvinylacétal (B) s'obtient par acétalisation d'un alcool de polyvinyle avec au moins un aldéhyde présentant de 1 à 3 atomes de carbone,
la résine de polyvinylacétal (B) s'obtient par acétalisation de l'alcool de polyvinyle en utilisant par combinaison au moins un aldéhyde avec 4 à 9 atomes de carbone, et
le rapport molaire d'aldéhyde avec 1 à 3 atomes de carbone/aldéhyde avec 4 à 9 atomes de carbone dans l'acétalisation est dans la gamme entre 40/60 et 80/20.

**2.** Composition de polymère thermoplastique selon la revendication 1, comprenant en outre de 0,1 à 20 parties en masse d'un agent de compatibilité (D).

**3.** Composition de polymère thermoplastique selon la revendication 1 ou 2, comprenant 100 parties en masse de l'élastomère thermoplastique (A), 10 à 70 parties en masse de la résine de polyvinylacétal (B), 1 à 200 parties en masse du plastifiant (C) et 0,1 à 17 parties en masse de l'agent de compatibilité (D).

**4.** Composition de polymère thermoplastique selon l'une quelconque des revendications 1 à 3, dans lequel l'aldéhyde avec 1 à 3 atomes de carbone est l'acétaldéhyde et l'aldéhyde ayant 4 à 9 atomes de carbone est le n-butylaldéhyde.

5. Composition de polymère thermoplastique selon l'une quelconque des revendications 1 à 4, dans laquelle la résine de polyvinylacétal (B) s'obtient par acétalisation de l'alcool de polyvinyle présentant un degré moyen de polymérisation de 100 à 4000 à un degré d'acétalisation dans la gamme entre 55 et 88% en mole.

6. Composition de polymère thermoplastique selon l'une quelconque des revendications 1 à 5, dans laquelle l'agent de compatibilité (D) est un copolymère aléatoire d'un monomère polymérisable non polaire et d'un monomère polymérisable polaire ou d'un copolymère à bloc ou greffé comprenant un bloc de polymère non polaire et un bloc de polymère polaire.

7. Produit moulé comprenant la composition de polymère thermoplastique selon l'une quelconque des revendications 1 à 6.

8. Produit moulé selon la revendication 7, dans lequel la composition de polymère thermoplastique adhère à au moins une matière sélectionnée parmi les céramiques, les métaux et les résines synthétiques.

9. Produit moulé selon la revendication 7, dans lequel les céramiques, les métaux, les résines synthétiques ou au moins deux matières sélectionnées parmi les céramiques, les métaux et les résines synthétiques adhèrent l'une à l'autre par la composition de polymère thermoplastique.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006291019 A
- JP 2006206715 A
- JP 63025005 A
- JP 9156035 A
- JP 2009227844 A
- JP 2010001364 A
- WO 2009081877 A